# EUROPÄISCHE PATENTSCHRIFT

(11) **EP 3 365 588 B1**
(45) Veröffentlichungstag und Bekanntmachung des Hinweises auf die Patenterteilung: **13.11.2019**
(21) Anmeldenummer: 16703799.3
(22) Anmeldetag: 10.02.2016
(51) Int. Cl.: F16L 37/14

(54) **ANSCHLUSSVORRICHTUNG**
CONNECTION DEVICE
DISPOSITIF DE RACCORDEMENT

(43) Veröffentlichungstag der Anmeldung: 29.08.2018
(73) Patentinhaber: EMS-Patent AG, 7013 Domat/Ems (CH)
(72) Erfinder: JELTSCH, Thomas, 7013 Domat/Ems (CH); SCHMID, Patrick, 9650 Nesslau (CH); CHEUNG, Ming Jiann, Suzhou Industrial Park Jiangsu 215021 (CN)
(74) Vertreter: OK pat AG
(86) Internationale Anmeldenummer: PCT/EP2016/052845
(87) Internationale Veröffentlichungsnummer: WO 2017/137077

(56) Entgegenhaltungen:
- EP-A1- 1 845 299
- WO-A1-2011/060967
- DE-A1-102011 006 097

## Beschreibung

Die vorliegende Erfindung betrifft eine Anschlussvorrichtung für zumindest einen eine ringförmige Aussennut umfassenden Steckabschnitt einer schlauchförmigen oder rohrförmigen Leitung oder eines Stutzens oder eines Formkörpers. Die Anschlussvorrichtung umfasst ein Gehäuse, in welches ein entsprechender Steckabschnitt einsteckbar ist, und ein flexibles Sperrelement, das in einer im Gehäuse ausgebildeten ringförmigen Innennut vormontierbar ist. Das flexible Sperrelement erlaubt im vormontierten Zustand unter elastischer Auslenkung das Einstecken eines Steckabschnitts in das Gehäuse, wobei das Sperrelement in der Aussennut des Steckabschnitts einrastet. Das Sperrelement ist im montierten Zustand gegen ein Verschieben in der Innennut-Umfangsrichtung gesichert.

Eine gattungsgemässe Anschlussvorrichtung ist bekannt aus der WO 2011/060967 A1. Hier erfolgt die Sicherung des Sperrelements zumindest gegen ein Verschieben in Auszugsrichtung mittels einer aussen am Gehäuse neben der Öffnung zur Innennut angeordneten Sicherungseinrichtung, die einen Aussenanschlag und zweckmässigerweise eine den Aussenanschlag enthaltende und aussen am Gehäuse angeordnete Aufnahmetasche umfasst, in welche das nach aussen ragende Ende des Sperrelements eingesteckt wird.

Die in der WO 2011/060967 A1 beschriebene Anschlussvorrichtung ist eine Weiterentwicklung der im Patent EP 1 845 299 B1 beschriebenen Anschlussvorrichtung für ein Rohr durch Einstecken in ein Gehäuse. Bei der in der EP 1 845 299 B1 beschriebenen Anschlussvorrichtung ist ein in einer ringförmigen Innennut des Gehäuses vormontierbares, flexibles Sperrelement erstmals gegen ein ungewolltes tangentiales Bewegen bzw. gegen ein allmähliches Herausdrehen z.B. durch Vibrationen gesichert, indem die Innennut und/oder deren Öffnung im Gehäuse mit mindestens einem Anschlag und das Sperrelement mit mindestens einer Rastnase zum Einrasten bei der Öffnung zur Ringnut im Gehäuse ausgestaltet ist.

Im Patent US 6,179,347 B1 für eine Rohrkupplung ist ebenfalls ein in einer ringförmigen Innennut eines Gehäuses vormontierbares Sperrelement mit bandförmigem Grundkörper und federartigen Fingern zum Einrasten in einer ringförmigen Aussennut des Steckabschnitts eines Rohrendes beschrieben. Jenes flexible Sperrelement ist aber nicht gegen ungewolltes Bewegen in der Nut gesichert. Das als Stand der Technik in der Figur 2 von US 6,179,347 B1 gezeigte Sperrelement weist zwar ein als separate Schraubkappe ausgeformtes Sicherungselement auf, aber das betreffende, rundkabelförmige Sperrelement kann erst nach dem Zusammenstecken der beiden Rohrenden eingeführt werden.

Aufgabe der vorliegenden Erfindung ist es, für eine Anschlussvorrichtung der genannten Art eine alternative Sicherungseinrichtung für das Sperrelement zur Verfügung zu stellen, die schnell und einfach funktioniert und keine Werkzeuge benötigt.

Diese Aufgabe wird gemäss der vorliegenden Erfindung mit einer Anschlussvorrichtung mit den Merkmalen von Anspruch 1 gelöst. Bevorzugte Ausführungsformen dieser Anschlussvorrichtung ergeben sich aus den abhängigen Ansprüchen. Zudem werden Verwendungen dieser Anschlussvorrichtung beansprucht.

Eine erfindungsgemässe Anschlussvorrichtung für zumindest einen eine ringförmige Aussennut umfassenden Steckabschnitt einer schlauchförmigen oder rohrförmigen Leitung, eines rohrförmigen Stutzens oder eines Formkörpers, umfasst:
a) ein Gehäuse, in das mindestens ein Steckabschnitt in einer Einsteckrichtung einsteckbar ist,
b) zumindest ein einstückiges Sperrelement, das einen Sperrabschnitt in Gestalt eines offenen Rings und einen Sicherungsabschnitt umfasst, wobei jeder Sperrabschnitt in einer im Gehäuse ausgebildeten ringförmigen Innennut vormontierbar ist und im vormontierten Zustand unter elastischer Auslenkung das Einstecken eines Steckabschnitts in das Gehäuse erlaubt und dessen Arretierung im Gehäuse bewerkstelligt, indem der Sperrabschnitt in die Innennut des Gehäuses eingreift und in die Aussennut des Steckabschnitts einrastet, und wobei jeder der Sperrabschnitte durch eine zugeordnete Gehäuseöffnung im Wesentlichen in einer Umfangsrichtung in diese Nuten einführbar und aus diesen Nuten herausziehbar ist,
c) zumindest eine Sicherungseinrichtung, mittels welcher der Sicherungsabschnitt auf einer Aussenseite der Gehäuseöffnung und damit der mit dem Sicherungsabschnitt verbundene Sperrabschnitt eines Sperrelements gegen ein Verschieben in einer Umfangsrichtung sicherbar ist,
wobei zumindest eine der Sicherungseinrichtungen als ein das Gehäuse umgreifender und auf diesem Gehäuse zumindest axial entgegen einem Widerstand bewegbarer Ring ausgebildet ist, der in der Einsteckrichtung eine axiale Aussparung aufweist, die zum Eingriff eines am Sicherungsabschnitt des Sperrelements angeordneten, im Wesentlichen radial abstehenden Nockens ausgebildet ist, wobei dieser Eingriff ein Verschieben des Sperrelements gegenüber der Sicherungseinrichtung, sowohl im vormontierten Zustand als auch nach dem Einstecken eines Steckabschnitts in das Gehäuse, in einer Umfangsrichtung verhindert.

Beim erstmaligen Einsetzen eines neuen Sperrelements wird dieses mit seinem Sperrabschnitt in der Regel von Hand in die Innennut des Gehäuses eingelegt und somit auf diese Weise vormontiert.

Der Ausdruck "ringförmig" bedeutet bei der vorliegenden Erfindung bevorzugt "kreisrund". "Kreisrund" bedeutet in Bezug auf das Gehäuse, den Steckabschnitt und die Sicherungseinrichtung eine Querschnittsgeometrie basierend auf einer Kreisform. Es ist aber nicht zwingend eine kreisrunde Geometrie erforderlich. Im Prinzip ist im Rahmen der vorliegenden Erfindung für den Steckabschnitt und das Gehäuse auch eine aufeinander abgestimmte Querschnittsform mit nichtkreisrundem, z.B. elliptischem Querschnitt möglich. Ein nichtkreisrunder, einander entsprechender Querschnitt wäre eine mögliche Variante eines Formschlusses, um ein Verdrehen des Steckabschnittes gegenüber dem Gehäuse zu unterbinden. Bei dieser Art einer Verdrehsicherung hätte die ringförmige Sicherungseinrichtung ebenfalls eine entsprechende, nichtkreisrunde Gestalt und wäre somit nicht drehbar. In einer weiteren möglichen Variante kann die Sicherungseinrichtung dennoch drehbar gestaltet sein, auch wenn der Steckabschnitt nichtkreisrund ausgestaltet ist und die Innenkontur des Gehäuses nichtkreisrund und auf den Steckabschnitt angepasst ausgestaltet ist. Dies gilt, sofern die Aussenkontur des Gehäuses kreisrund ausgebildet ist, um eine kreisrunde Sicherungseinrichtung mit Drehbarkeit zu ermöglichen. Auch bei einem nichtkreisrunden Querschnitt muss der Sperrabschnitt des Sperrelements immer noch durch eine zugeordnete Gehäuseöffnung in die erwähnten Nuten einführbar und aus diesen Nuten herausziehbar bleiben, weshalb die Abweichung des Querschnitts von einer kreisrunden Geometrie nicht zu stark sein kann.

Bevorzugte Ausführungsformen der Anschlussvorrichtung werden sowohl direkt nachfolgend als auch im Zusammenhang mit den Figuren weiter hinten erläutert.

Bei der erfindungsgemässen Anschlussvorrichtung ist die Gehäuseöffnung bevorzugt als ein an eine Querschnittsform und eine Neigung des Sperrabschnitts gegenüber der Einsteckrichtung angepasstes Einlauffenster ausgebildet. Dadurch wird eine geometrisch passende Durchführung des Sperrabschnitts durch die Gehäuseöffnung erreicht, denn der Sperrabschnitt ist entweder als Ganzes oder zumindest mit seinen federartigen Fingern oder Zähnen zum Einrasten in der Aussennut eines Steckabschnitts schräg bzw. konisch nach innen geneigt.

Geeignete Gestaltungsmöglichkeiten für Sperrabschnitte sind aus dem eingangs zitierten Stand der Technik bekannt. Eine besondere Ausführungsform eines Sperrelements bzw. Sperrabschnitts ist in der WO 2011/ 060967 A1 in den Figuren 4, 10 und 11 dargestellt. Auch ein so gestalteter Sperrabschnitt ist bei der vorliegenden Erfindung einsetzbar. Andere mögliche Varianten werden weiter hinten erläutert.

Die als Ring ausgebildete Sicherungseinrichtung ist bevorzugt als geschlossener Ring ausgebildet, was bedeutet, dass ein solcher Ring zumindest einen Bereich hat, der über den ganzen Umfang geschlossen ist. Dieser geschlossene Bereich kann in seinem Durchmesser und/oder in seiner axialen Lage über den Umfang gesehen variieren (z.B. mäandrieren) und muss nicht einen konstanten Querschnitt aufweisen. Anders ausgedrückt bedeutet "geschlossen", dass der Ring materialmässig rundherum zusammenhängt und nirgends vollständig durchtrennt ist. Die Breite und die Dicke des Rings brauchen dabei nicht überall gleich zu sein. In einer bevorzugten Ausführungsform ist die als Ring ausgebildete Sicherungseinrichtung auf der von der Einsteckrichtung abgewandten Seite geschlossen (d.h. durchgehend), während diese auf der anderen Seite durch die axiale Aussparung für den am Sicherungsabschnitt des Sperrelements angeordneten Nocken unterbrochen ist. In einer anderen bevorzugten Ausführungsform ist die als Ring ausgebildete Sicherungseinrichtung so ausgeführt, dass sich eine Aussparung für den Nocken des Sperrelements an der Innenseite des Rings befindet, und die Aussparung nicht bis an die Aussenseite des Rings reicht. Der Ring wäre dann zumindest an dieser Stelle dicker als die Höhe des Nockens. Bei letzterer Ausführung wäre der Nocken von aussen nicht sichtbar, aber vor äusseren Einflüssen geschützt.

Die als Ring ausgebildete Sicherungseinrichtung kann in einer weiteren Ausführungsform ein nicht geschlossener Ring sein. Ein derartiger, nicht geschlossener, d.h. offener Ring ist an einem Ort ganz unterbrochen. Durch entsprechende Auswahl von Material und/oder Konstruktion kann auch bei einem offenen Ring für eine genügende Eigenstabilität gesorgt werden. Ein derartiger, offener Ring kann zum Beispiel an der Stelle, wo die axiale Aussparung ist, einen durchgehenden axialen Spalt aufweisen. Die axiale Aussparung bzw. der axiale Spalt ist bei dieser ersten Variante zum Eingriff mit dem Nocken des Sperrelements ausgebildet. In einer zweiten Variante einer als offener Ring ausgebildeten Sicherungseinrichtung kann der Unterbruch des Rings an einer anderen Stelle angeordnet sein als die axiale Aussparung für den Nocken. Bei dieser zweiten Variante wäre es wie schon bei der geschlossenen Ausführungsform erläutert möglich, die axiale Aussparung ebenfalls so zu gestalten, dass sie bis an die Aussenseite des Rings reicht oder nicht. Die Breite des Unterbruchs im Ring wäre bei dieser zweiten Variante zudem unabhängig von der Breite der axialen Aussparung, wobei die axiale Aussparung in dieser zweiten Variante so zu gestalten ist, dass sie nicht zu einem zweiten Unterbruch des Ringes führt.

Vorzugsweise ist die erfindungsgemässe Anschlussvorrichtung so ausgebildet, dass die Sicherungseinrichtung nach einem axialen Aufsetzen auf das Gehäuse zudem auf dem Gehäuse in dessen Umfangsrichtung drehbar und zur Mitnahme des Nockens in der axialen Aussparung in dieser Umfangsrichtung ausgestaltet ist.

Bei einer bevorzugten Ausführungsform einer Anschlussvorrichtung mit drehbarer Sicherungseinrichtung ist letztere ausgebildet zum Aufdrehen und zum Herausziehen des Sperrabschnitts des Sperrelements aus der Gehäuseöffnung, aus der Innennut des Gehäuses und aus der dieser gegenüber liegenden Aussennut des Steckabschnitts mittels Drehen in einer entsprechenden Umfangsrichtung. Das Herausziehen des Sperrelements ist vorzugsweise gegen einen Anfangs-Widerstand gesichert.

Bei einer bevorzugten Ausführungsform einer Anschlussvorrichtung mit drehbarer Sicherungseinrichtung ist die Sicherungseinrichtung überdies ausgebildet zum Zudrehen und zum Wieder-Einführen des Sperrabschnitts des Sperrelements in die Gehäuseöffnung und in die Innennut des Gehäuses oder zum Einführen des Sperrabschnitts des Sperrelements in die Gehäuseöffnung, in die Innennut des Gehäuses und in die dieser gegenüber liegende Aussennut eines eingesetzten Steckabschnitts mittels Drehen in einer entsprechenden Umfangsrichtung.

Weil das Sperrelement durch die aufgesetzte ringförmige Sicherungseinrichtung verdeckt ist, ist es für den Benutzer zur Orientierung bevorzugt, wenn auf der Aussenseite der Sicherungseinrichtung, beispielsweise mit Worten und/oder Pfeilen und/ oder sonstigen Kennzeichnungen, angegeben ist, in welcher Drehrichtung geöffnet und in welcher geschlossen wird. Auf dem Gehäuse wiederum sind bevorzugt Markierungen angebracht, die in Bezug auf den Nocken des Sicherungsabschnitts in der axialen Aussparung anzeigen, ob sich das Sperrelement in der geschlossenen oder offenen Position oder dazwischen befindet.

Es soll auch erwähnt werden, dass die Erfindung nicht beschränkt ist auf nur ein Sperrelement pro Steckabschnitt. In besonderen Ausführungsvarianten können zur Erhöhung der axialen Auszugskraft zwei oder mehr Sperrelemente hintereinander in einer entsprechenden Anzahl Nuten von Gehäuse und Steckabschnitt angeordnet sein. Die Sicherungseinrichtung würde dann in einer entsprechend längeren axialen Aussparung alle Sperrelemente bzw. deren Nocken an den Sicherungsabschnitten parallel sichern sowie beim Drehen synchron oder im Wesentlichen synchron bewegen.

Bevorzugt ist bei der erfindungsgemässen Anschlussvorrichtung das Material für das Sperrelement und/oder die Sicherungseinrichtung aus Kunststoffen oder Verbundwerkstoffen ausgewählt. Dies gewährleistet insbesondere für das Sperrelement eine ausreichende Flexibilität. Als Material für das Gehäuse und/oder für den Steckabschnitt sind bevorzugt Kunststoffe, Verbundwerkstoffe, Keramiken, Glaskeramiken, Gläser oder Metalle ausgewählt. Besonders bevorzugt umfassen die für das Sperrelement, die Sicherungseinrichtung, das Gehäuse und/oder den Steckabschnitt auszuwählenden Kunststoffe Polyamide. Die Kunststoffe bzw. die Polyamide enthalten vorzugsweise Zusatzstoffe, Füllstoffe und/oder Verstärkungsmittel. Speziell bevorzugt sind Polyamide ausgewählt aus der Gruppe umfassend Polyamid 6, Polyamid 66, Polyamid 46, Polyamid 11, Polyamid 12, Polyamidelastomere, Polyphthalamide, teilaromatische teilkristalline Copolyamide, und Mischungen dieser Polyamide.

Zu den am Steckabschnitt befindlichen möglichen Ausformungen sollen noch folgende Anmerkungen gemacht werden:
- Im Falle einer schlauchförmigen oder rohrförmigen Leitung kann es sich um eine Fluidleitung handeln, zur Durchleitung eines Fluids als Gas (z.B. Luft), als Dampf, als Flüssigkeit, oder als Gemisch dieser Aggregatzustände. Die schlauchförmige oder rohrförmige Leitung kann aber auch als Schutzrohr für darin verlaufende Kabel ausgebildet sein und ist dabei bevorzugt gewellt.
- Wenn es sich um einen rohrförmigen Stutzen handelt, so kann dies ein an einem Behälter angeordneter Stutzen sein. Ein solcher Stutzen kann z.B. am Behälter angeschraubt oder daran angeschweisst sein. In einer bevorzugten Ausführungsform ist der Stutzen z.B. mittels Kunststoffspritzguss oder Blasformen direkt am Behälter angeformt. Beim Behälter kann es sich beispielsweise um ein Filtergehäuse handeln. In einer anderen Ausführungsform kann der Behälter z.B. ein Kanister sein, und das Gehäuse kann durch eine geschlossene Fortsetzung als Verschlusskappe für einen solchen Kanister bzw. für dessen Stutzen ausgebildet sein.
- Unter einem Formkörper mit entsprechendem Steckabschnitt ist ein beliebig gestaltetes Teil zu verstehen, das ein Vollkörper oder ein Hohlkörper oder ein anderweitig gestaltetes Teil sein kann. Ein solches Teil kann z.B. ein Verschluss für das Gehäuse bzw. für ein am Gehäuse angeschlossenes System sein. Beim am Gehäuse angeschlossenen System kann es sich um ein Leitungssystem handeln. In einer anderen Ausführungsform kann das Gehäuse in seiner Fortsetzung als Behälter, z.B. als Fass, Tank, Kanister, oder als ein kleineres Behältnis oder als eine Dose ausgebildet sein. Bei dieser Ausführungsform bildet ein als Verschluss ausgestalteter Formkörper sozusagen den Deckel für einen als Gehäuse-Fortsetzung gestalteten Behälter. Formkörper können unter anderem dem Industriebereich, dem Bauwesen, dem Verpackungsbereich, oder auch dem Wohnbereich zugehörig sein. In letzterem Bereich könnten bevorzugt Wohnungs-Ausstattungskomponenten, zum Beispiel Lampenbestandteile, auf diese Art befestigt werden, insbesondere eine Lampenkugel (z.B. aus Glas) mit Steckabschnitt, die in einer entsprechenden Fassung an der Decke auf erfindungsgemässe Weise angeschlossen werden könnte, und die Fassung als ein Gehäuse mit erfindungsgemässer Sicherungseinrichtung und Sperrelement ausgebildet wäre.

Die beschriebene, erfindungsgemässe Anschlussvorrichtung findet bevorzugt Verwendung zum Verbinden, Anschliessen oder Verschliessen von Fluidleitungen im Automobilbau (insbesondere beim Luftansaugsystem), im Sanitärbereich, bei Klimaanlagen und Lüftungsinstallationen, im Industrie- und Transportbereich (z.B. auch für die Befestigung der Enden von gewellten Kabelschutzrohren), oder als Anschlüsse und/oder Halterungen bei industriellen Fertigungsverfahren.

Ein Beispiel für eine Anwendungsmöglichkeit bei einem industriellen Fertigungsverfahren sind Halterungen bei der Herstellung von Gummihandschuhen. Gummihandschuhe werden aus Naturkautschuk (Natur-Latex) oder aus synthetischem Gummi (z.B. synthetischem Isopren-Kautschuk oder Nitril-Butadien-Kautschuk oder Chloropren-Kautschuk oder Polyvinylchlorid) hergestellt. Dabei werden künstliche Handformen, die meistens aus technischem Porzellan (also aus einer Keramik) bestehen, in eine flüssige Kautschuk-Masse getaucht. Bei diesem Tauchverfahren haftet das Kautschuk-Material gleichmässig an der Keramikform an, so dass sich auf deren Oberfläche ein Gummifilm bildet. Nach dem Trocknen und Vulkanisieren in einem Ofen kann der fertige elastische Handschuh von der Handform abgezogen werden. Solche Handformen können nun bei einer erfindungsgemässen Anwendung der vorliegenden Erfindung als Formkörper mit einem Steckabschnitt ausgebildet und in einer erfindungsgemässen Anschlussvorrichtung eingesteckt werden. Festgemacht mit dieser Halterung können solche erfindungsgemässen Keramik-Tauchformen die Tauchbäder (Kautschukbad und eventuelle weitere Behandlungsbäder) durchlaufen. Nach dem Durchlauf ist ein schnelles und unkompliziertes Austauschen der Steckabschnitte möglich, d.h. Handformen mit darauf gebildeten Gummihandschuhen können schnell gegen neue Keramikformen für den nächsten Durchlauf ausgewechselt werden.

Mit der vorliegenden Erfindung wird somit eine vielseitig verwendbare Anschlussvorrichtung mit einer weiterentwickelten Sicherungseinrichtung verfügbar gemacht, die allen technischen Ansprüchen genügt und sich einfach und zugleich elegant bedienen lässt.

Vorteile der erfindungsgemässen Anschlussvorrichtung umfassen:
- Einfache und schnelle Montage aller Komponenten ohne Werkzeuge.
- Bedienungsfreundliche Sicherungseinrichtung in Form eines von Hand gut greifbaren Rings.
- Nach dem Aufsetzen der Sicherungseinrichtung ist das Sperrelement auf der Innenseite der Sicherungseinrichtung geschützt und nicht verlierbar.
- In ihrer vorzugsweise drehbaren Ausführungsform und im Zusammenwirken mit dem Nocken am Sicherungsabschnitt des Sperrelements ermöglicht die Sicherungseinrichtung ein elegantes, schnelles und mehrfaches Herausziehen und Wieder-Einführen des Sperrabschnitts.
- Auf diese Weise ist das Sperrelement (auch "Clip" genannt) mehrfach verwendbar und wiederholt schnell einsetzbar.
- Das einfache Handling ermöglicht einen schnellen und wiederholten Wechsel von Steckabschnitten an demselben Gehäuseanschluss.
- Trotz der schnellen Auswechselbarkeit ist im Betriebszustand der sichere Sitz von Sperrelement und Steckabschnitt jeweils gewährleistet.
- Durch die Arretierung der Komponenten durch einfache Drehbewegung und die Verzichtbarkeit von Werkzeug ist eine einfache Montage in Bereichen mit wenig Platz, beispielsweise in schwer zugänglichen Abschnitten eines Motorraums, möglich.

Die erfindungsgemässe Anschlussvorrichtung soll nachfolgend anhand von Figuren, welche beispielhafte, den Umfang der vorliegenden Erfindung nicht begrenzende Ausführungsformen zeigen, näher erläutert werden. Es zeigen:
- Fig. 1: eine perspektivische Gesamtansicht einer erfindungsgemässen Anschlussvorrichtung im nicht zusammengefügten Zustand;
- Fig. 2: einen axialen Längsschnitt durch die Anschlussvorrichtung von Fig. 1;
- Fig. 3: einen axialen Längsschnitt durch eine zusammengefügte Anschlussvorrichtung;
- Fig. 4: einen Querschnitt durch eine zusammengefügte Anschlussvorrichtung auf der Höhe des Sperrelements;
- Fig. 5: eine perspektivische Ansicht der Anschlussvorrichtung mit vormontiertem Sperrelement und Sicherungseinrichtung ohne Steckabschnitt;
- Fig. 6A: eine Seitenansicht eines Sperrelements mit helixartiger Steigung des Sperrabschnitts in Doppelzahnausführung;
- Fig. 6B: eine perspektivische Ansicht des Sperrelements von Fig. 6A;
- Fig. 6C: eine perspektivische Seitenansicht eines Sperrelements mit einem im Bereich der Spitze gekröpften oder geknickten Sperrabschnitt;
- Fig. 7A: einen Ausschnitt aus einem Sperrabschnitt mit rechteckiger Mäandrierung;
- Fig. 7B: einen Ausschnitt aus einem Sperrabschnitt mit gestreckter Mäandrierung;
- Fig. 8A: einen axialen Längsschnitt durch eine Anschlussvorrichtung mit zwei gegenüberliegenden eingesteckten Steckabschnitten;
- Fig. 8B: einen axialen Längsschnitt durch eine Anschlussvorrichtung mit einer Fortsetzung am Gehäuse in Gestalt einer Wand;
- Fig. 9: einen axialen Längsschnitt durch eine als T-Stück ausgeführte Anschlussvorrichtung mit drei eingesteckten Steckabschnitten und einem als Verschluss ausgebildeten Formkörper.

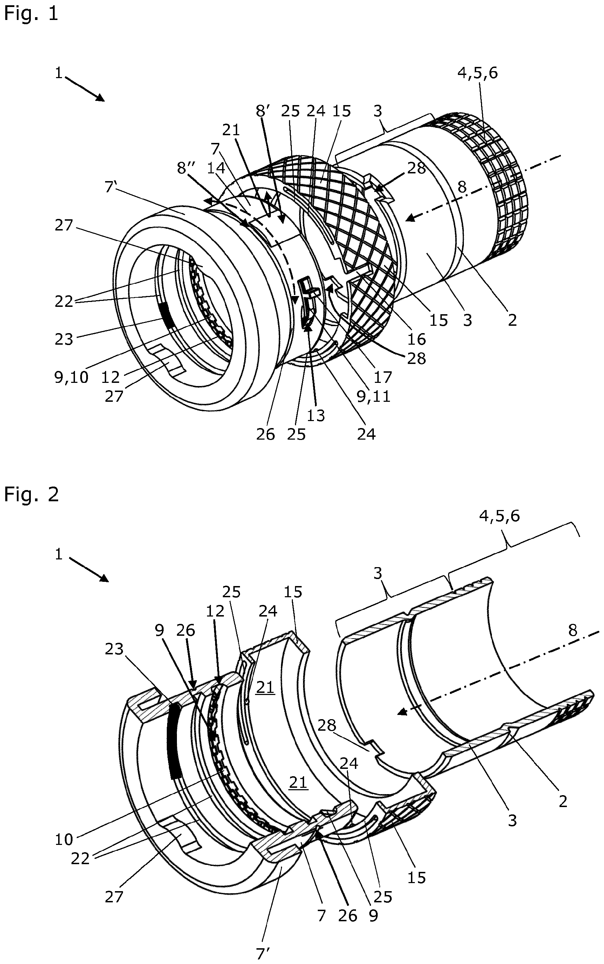

In den Figuren 1 bis 9 sind Details der erfindungsgemässen Anschlussvorrichtung und ein paar nicht einschränkend zu verstehende Variationsmöglichkeiten zur Illustration der Erfindung beispielhaft gezeigt. In den einzelnen Figuren sind sich entsprechende Teile mit denselben Bezugszeichen versehen und haben die gleiche Funktion, auch wenn dies nicht in jedem Fall ausführlich beschrieben ist.

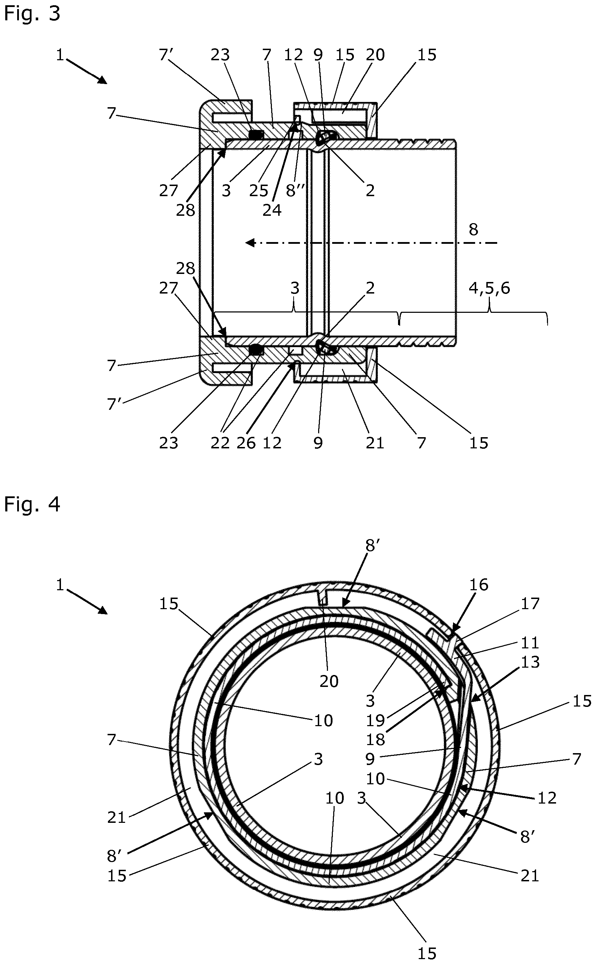

In den Figuren Fig. 1 und Fig. 2 sind wesentliche Teile der erfindungsgemässen Anschlussvorrichtung 1 und auch einige bevorzugte Merkmale dargestellt, wie im Folgenden erläutert wird:
In das Gehäuse 7 ist der Steckabschnitt 3, der eine Aussennut 2 umfasst, in einer Einsteckrichtung 8 einsteckbar. Der Steckabschnitt 3 gehört zu einer schlauchförmigen oder rohrförmigen Leitung 4, oder zu einem rohrförmigen Stutzen 5, oder zu einem Formkörper 6. In einer im Gehäuse 7 ausgebildeten ringförmigen Innennut 12 ist ein einstückiges Sperrelement 9 beziehungsweise dessen Sperrabschnitt 10 vormontiert. Im dargestellten vormontierten Zustand ragt noch der Sicherungsabschnitt 11 des Sperrelements 9 durch die Gehäuseöffnung 13 auf die Aussenseite des Gehäuses 7. Das Gehäuse 7 weist in der Regel noch eine Fortsetzung 7' auf, in Fig. 1 und Fig. 2 beispielsweise in Form eines Kragens. Wenn der Steckabschnitt 3 in der Einsteckrichtung 8 in das Gehäuse 7 eingeführt und eingesteckt wird, so wird der Sperrabschnitt 10 bzw. dessen schräg nach innen vorstehender Bereich elastisch ausgelenkt und rastet dann in die Aussennut 2 des Steckabschnitts 3 ein, so dass der Steckabschnitt 3 im Gehäuse 7 arretiert wird. Mit einer Sicherungseinrichtung 15 in Gestalt eines hier gezeigten geschlossenen Rings wird sodann das Sperrelement 9 gegen ungewolltes Lösen gesichert, indem die ringförmige Sicherungseinrichtung 15 mit ihrer axialen Aussparung 16 axial so über das Gehäuse 7 bewegt bzw. geschoben wird, dass es zum Eingriff des im Wesentlichen radial abstehenden Nockens 17 des Sicherungsabschnitts 11 mit der axialen Aussparung 16 kommt. Das axiale Draufschieben der Sicherungseinrichtung geschieht entgegen einem Widerstand. Der Eingriff des Nockens 17 in die axiale Aussparung 16 der aufgesetzten Sicherungseinrichtung 15 verhindert ein Verschieben des Sperrelements 9 gegenüber der Sicherungseinrichtung 15. Zwischen einer Innenseite der aufgesetzten Sicherungseinrichtung 15 und einer Aussenseite des Gehäuses 7 wird ein Raum 21 gebildet, auf den bei Fig. 4 noch näher eingegangen wird. Anhand der Fig. 1 kann man sich im Übrigen auch eine Variante eines offenen Rings für die Sicherungseinrichtung 15 vorstellen, bei welcher die axiale Aussparung 16 bis zum gegenüberliegenden Rand des Rings reichen und so einen durchgehenden axialen Spalt bilden würde.

In einer bevorzugten Ausführungsform weist die erfindungsgemässe Sicherungseinrichtung 15 an ihrer Innenseite, vorzugsweise an mindestens einem Federsteg 25, federnd angebrachte Noppen 24 auf, die nach Überwindung des Widerstandes in axialer Richtung bevorzugt zum Einklicken in einer ringförmigen Rille, d.h. einer Ringnut 26 auf der Aussenseite des Gehäuses 7 ausgebildet sind. Der Widerstand in axialer Richtung kann zum Beispiel, wie dargestellt in Fig. 1, durch ein Flachstück 8' und eine Erhebung 8" bewerkstelligt werden, über welche ein entsprechender Noppen 24 gleiten und die Erhebung 8" überwinden muss. Der Widerstand könnte aber beispielsweise auch durch einen ringförmigen Wulst gebildet werden.

Wenn die Sicherungseinrichtung 15 in Umfangsrichtung 14 drehbar ist (so wie in Fig. 1 ersichtlich), ist dabei das Drehen mit Vorteil durch die an der Innenseite der Sicherungseinrichtung 15 an Federstegen 25 angebrachte Noppen 24 geführt, die bevorzugt in der erwähnten ringförmigen Rille bzw. Ringnut 26 (die in diesem Fall kreisrund ist) auf der Aussenseite des Gehäuses 7 gleiten.

Bevorzugt weist das Gehäuse 7 der erfindungsgemässen Anschlussvorrichtung 1 mindestens eine zusätzliche ringförmige Innennut 22 zur Aufnahme einer Dichtung 23 (beispielsweise eine O-Ring-Dichtung) zwischen dem Gehäuse 7 und dem mindestens einen Steckabschnitt 3 auf.

In einer bevorzugten Ausführungsform kann bei einer erfindungsgemässen Anschlussvorrichtung 1 auch bei kreisrundem Querschnitt der Steckabschnitt 3 gegenüber dem Gehäuse 7 gegen Verdrehen gesichert werden. Dies wird, wie in Fig. 1 und Fig. 2 dargestellt, vorzugsweise mittels mindestens einem Positioniernocken 27 an der Innenseite des Gehäuses 7 und entsprechenden Positionierausschnitten 28 in der Stirnseite des Steckabschnitts 3 realisiert, die bei richtig positioniertem Zusammenfügen ineinander eingreifen. Besonders bevorzugt sind zwei einander gegenüberliegende Positioniernocken 27 und zwei entsprechende Positionierausschnitte 28.

Fig. 3 zeigt einen axialen Längsschnitt durch eine erfindungsgemässe Anschlussvorrichtung 1 im zusammengefügten Zustand. Alle Bezugszeichen kamen bereits bei der Erläuterung von Fig. 1 und Fig. 2 vor, bis auf die Nummer 20, welche in Fig. 3 einen axialen Steg 20 an der Innenseite der Sicherungseinrichtung 15 bezeichnet, dessen Bedeutung bei Fig. 4 näher erklärt wird. Gut sichtbar in diesem Längsschnitt sind die Dichtung 23 sowie oben eine Erhebung 8". Letztere bildet in der dargestellten bevorzugten Ausführungsform den Widerstand für einen am Federsteg 25 angebrachten Noppen 24 beim axialen Draufschieben der Sicherungseinrichtung 15.

Wie in Fig. 4 dargestellt ist die Anschlussvorrichtung 1 bevorzugt so ausgebildet, dass ein Ende 18 der Innennut 12 als Anschlag für eine Spitze 19 des Sperrabschnitts 10 und somit als Endpunkt beim Zudrehen der Sicherungseinrichtung 15 ausgebildet ist. Die Anschlussvorrichtung 1 ist zudem bevorzugt so ausgebildet, dass ein axialer Steg 20 an der Innenseite der Sicherungseinrichtung 15 als Endanschlag beim Aufdrehen der Sicherungseinrichtung angeordnet ist. Beim Endanschlag steht der axiale Steg 20 auf der Aussenseite der Gehäuseöffnung 13 am Sperrabschnitt 10 an. Die Position des axialen Stegs ist so bemessen, dass beim Erreichen dieses Endanschlags die Spitze 19 des Sperrabschnitts 10 noch in der Gehäuseöffnung 13 verbleibt. Dadurch wird ein einfaches Wieder-Einführen des Sperrabschnitts 10 des Sperrelements 9 in die Gehäuseöffnung 13 und in die Innennut 12 des Gehäuses 7 oder ein Einführen des Sperrabschnitts 10 des Sperrelements 9 in die Gehäuseöffnung 13, in die Innennut 12 des Gehäuses 7 und in die dieser gegenüber liegenden Aussennut 2 eines eingesetzten Steckabschnitts 3 durch Zudrehen ermöglicht.

In einer vorteilhaften Ausführungsform dieser bevorzugten Anschlussvorrichtung 1 ist diese für ein mehrfaches Zudrehen und Aufdrehen der ringförmigen Sicherungseinrichtung 15 konzipiert, indem diese Anschlussvorrichtung 1 zwischen einer Innenseite der Sicherungseinrichtung 15 und einer Aussenseite des Gehäuses 7 einen (in Fig. 4 gut sichtbaren) Raum 21 definiert, in welchem nach jedem Lösen einer Steckverbindung durch Aufdrehen der aufgesetzten Sicherungseinrichtung 15 das Sperrelement 9 verbleibt.

In Fig. 4 ist zudem gut sichtbar, dass die Gehäuseöffnung 13 in ihrer Grundausrichtung vorzugsweise im Wesentlichen tangential aus der Innennut 12 heraus verläuft.

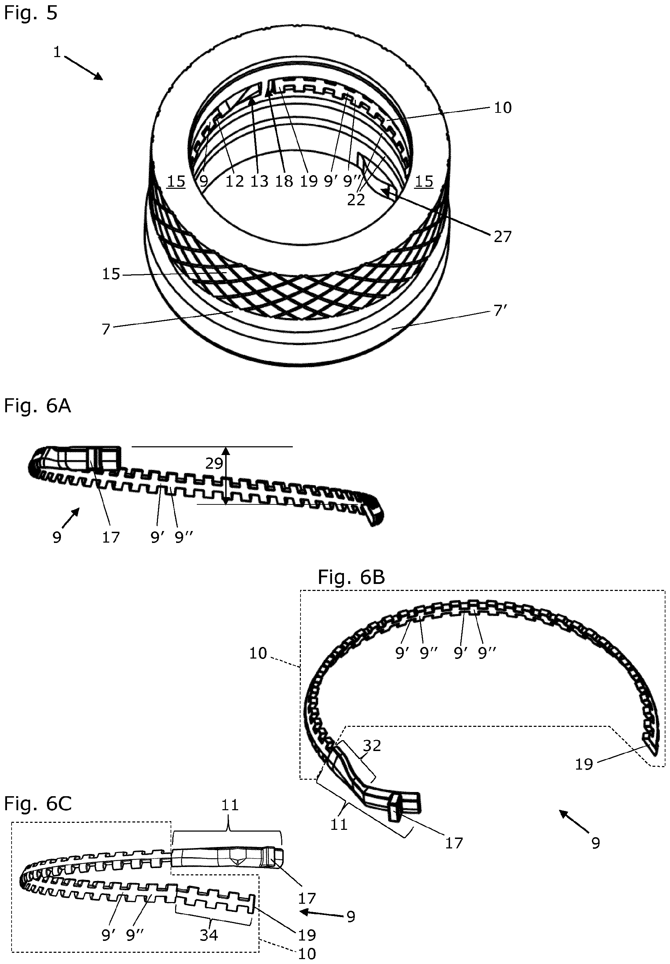

In Fig. 5 ist ein in einer Innennut 12 vormontiertes Sperrelement 9 gut sichtbar. Dieses nachher auch den Fig. 6A, Fig. 6B und Fig. 6C nochmals separat gezeigte Sperrelement 9 weist in dieser Ausführungsform im Sperrabschnitt 10 eine durchgehende bandförmige Seele 9' mit Doppelzähnen 9" auf. Sichtbar ist zudem ein Positioniernocken 27.

Fig. 6A und Fig. 6B: In einer vorteilhaften Ausführungsform der erfindungsgemässen Anschlussvorrichtung 1 weist der Sperrabschnitt 10 des Sperrelements 9 im nicht eingebauten, spannungslosen Zustand eine helixartige Steigung 29 auf. Das heisst der offene Ring des Sperrabschnitts 10 ist in dieser bevorzugten Variante mit einer schraubenartigen Steigung vorgeformt. Dies dient zur Gegenkompensation bei der Ausrichtung des Sperrabschnitts 10 während seiner Einlauf-Bewegung in die Innennut 12 beim Zudrehen der Sicherungseinrichtung 15. Diese bevorzugte helixartige Ausführungsform des Sperrabschnitts 10 ermöglicht es, dass beim Zudrehen der Sicherungseinrichtung 15 der Sperrabschnitt 10 auch bei noch nicht vorhandenem Steckabschnitt 3 genau in die Innennut 12 des Gehäuses 7 einläuft. So kann nach einem Entfernen eines Steckabschnitts 3 das Sperrelement 9 durch einfaches Zudrehen der Sicherungseinrichtung 15 schnell wieder in eine vormontierte Position gebracht werden, und ein neuer Steckabschnitt 3 kann anschliessend eingesteckt werden und rastet mit seiner Aussennut 2 am Sperrabschnitt 10 ein. Alternativ zur helixartigen Steigung 29 oder in Kombination mit letzterer kann zur Erreichung dieses vorteilhaften Effekts das Sperrelement 9 im Sicherungsabschnitt 11 zum Sperrabschnitt 10 hin einen Drehabschnitt 32 aufweisen, der gekröpft oder geknickt ist. In Fig. 6B ist der Sperrabschnitt 10 gestrichelt eingerahmt.

Eine weitere Alternative zur Erreichung des im vorherigen Absatz erläuterten vorteilhaften Effekts ist in Fig. 6C dargestellt, wo der Sperrabschnitt 10 ebenfalls gestrichelt eingerahmt ist. Fig. 6C zeigt eine perspektivische Seitenansicht eines Sperrelements 9 mit einem bei der Spitze 19 des Sperrabschnitts 10 gekröpften oder geknickten Bereich 34, wobei die Kröpfung oder Krümmung in die gleiche Richtung zeigt wie es bei einer Helixform mit einer helixartigen Steigung 29 der Fall wäre. Auch diese Variante ist allein oder in Kombination mit den anderen geschilderten Varianten möglich.

Sperrelemente 9 bzw. Sperrabschnitte 10 ohne helixartige Vorformung 29 und/oder ohne gekröpften oder geknickten Drehabschnitt 32 und/oder ohne einen gekröpften oder geknickten Bereich 34 können bei der erfindungsgemässen Anschlussvorrichtung 1 an sich ebenfalls verwendet werden. Deren Verwendung ist aber mit der Einschränkung verbunden, dass dann eine einfache Vormontage durch Zudrehen der Sicherungseinrichtung 15 ohne einen eingesteckten Steckabschnitt 3 nicht in allen Fällen möglich ist. Dann ist es zum Zusammenfügen der Verbindung in der Regel erforderlich, zuerst einen neuen Steckabschnitt 3 ins Gehäuse einzuführen, so dass ein geschlossener ringförmiger Kanal aus der Innennut 12 des Gehäuses 7 und der dieser gegenüber liegenden Aussennut 2 des Steckabschnitts 3 gebildet wird. In diesen Kanal läuft ein solcher Sperrabschnitt 10 beim anschliessenden Zudrehen der Sicherungseinrichtung 15, geführt durch die Raumbegrenzung der beiden Nuten 2 und 12, in der richtigen Bahn und nicht daneben ein.

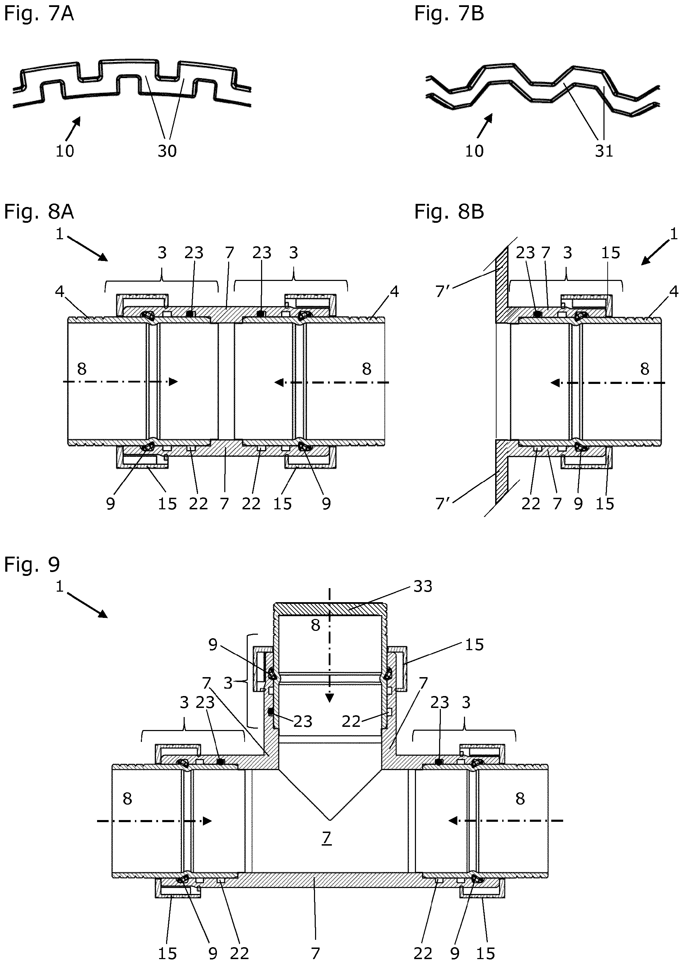

Fig. 7A und Fig. 7B: Ein Sperrabschnitt 10 kann anstelle einer bandförmigen Seele 9' mit daran angeformten federartigen Fingern oder Zähnen 9" auch nach dem Konzept einer Mäandrierung ausgebildet sein. Bei letzterem Konzept kann nicht mehr zwischen einem durchgehenden Band und Zähnen unterschieden werden, sondern der Sperrabschnitt ist dann mäanderförmig ausgebildet. Die elastische Auslenkung eines solchen Sperrabschnitts 10 erfolgt durch Torsion des gesamten Sperrabschnitts in sich. Fig. 7A zeigt einen Ausschnitt aus einem Sperrabschnitt 10 mit rechteckiger Mäandrierung 30. Fig. 7B zeigt einen Ausschnitt aus einem Sperrabschnitt 10 mit gestreckter Mäandrierung 31. Alternativ könnte ein Sperrabschnitt 10 aber auch aus abwechselnden Segmenten von beiden Konzepten aufgebaut sein.

Fig. 8A, Fig. 8B und Fig. 9: Bevorzugt ist das Gehäuse 7 der erfindungsgemässen Anschlussvorrichtung 1 zum Aufnehmen genau eines oder von zwei oder mehr Steckabschnitten 3 ausgebildet. In einer besonderen Ausführungsform ist das Gehäuse 7 der erfindungsgemässen Anschlussvorrichtung 1 wie in Fig. 8A dargestellt als doppelseitiges Verbindungsteil zum beidseitigen Aufnehmen von zwei gegenüberliegenden Steckabschnitten 3 ausgebildet. Das wäre zum Beispiel eine Kupplung zum Verbinden von zwei Rohrenden von zwei rohrförmigen Leitungen 4.

Fig. 8B zeigt ein Gehäuse 7 mit genau einem Steckabschnitt 3, wobei die Fortsetzung 7' des Gehäuses 7 eine Wand darstellt. Letzteres könnte z.B. die Wand eines grossen Behälters sein, an welchen mit dem Steckabschnitt 3 eine schlauchförmige oder rohrförmige Leitung 4 angeschlossen wird.

In anderen vorteilhaften Ausführungsformen ist das Gehäuse 7 der erfindungsgemässen Anschlussvorrichtung 1 als T-Stück oder als Mehrfachanschluss gestaltet. In Fig. 9 ist ein entsprechendes T-Stück dargestellt, mit der zusätzlichen Variante, dass der dritte Anschluss mit einem Verschluss 33 verschlossen ist, als Beispiel für einen möglichen Formkörper 6.

**Bezugszeichenliste**

| | | | |
|---|---|---|---|
| 1 | Anschlussvorrichtung | 16 | axiale Aussparung |
| 2 | Aussennut (von Steckabschnitt 3) | 17 | Nocken von 11 |
| 3 | Steckabschnitt | 18 | Ende der Innennut 12 |
| 4 | Leitung | 19 | Spitze von 10 |
| 5 | Stutzen | 20 | axialer Steg |
| 6 | Formkörper | 21 | Raum |
| 7 | Gehäuse | 22 | zusätzliche Innennut |
| 7' | Fortsetzung von 7 | 23 | Dichtung |
| 8 | Einsteckrichtung | 24 | Noppen |
| 8' | Flachstück | 25 | Federsteg |
| 8" | Erhebung | 26 | Ringnut |
| 9 | Sperrelement | 27 | Positioniernocken |
| 9' | bandförmige Seele von 10 | 28 | Positionierausschnitt |
| 9" | Doppelzahn von 10 | 29 | helixartige Steigung von 10 |
| 10 | Sperrabschnitt von 9 | 30 | rechteckige Mäandrierung von 10 |
| 11 | Sicherungsabschnitt von 9 | 31 | gestreckte Mäandrierung von 10 |
| 12 | Innennut (im Gehäuse 7) | 32 | Drehabschnitt von 11 |
| 13 | Gehäuseöffnung | 33 | Verschluss (Beispiel für 6) |
| 14 | Umfangsrichtung | 34 | gekröpfter oder geknickter Bereich von 10 bei der Spitze 19 |
| 15 | Sicherungseinrichtung | | |

## Patentansprüche

1. Anschlussvorrichtung (1) für zumindest einen eine ringförmige Aussennut (2) umfassenden Steckabschnitt (3) einer schlauchförmigen oder rohrförmigen Leitung (4), eines rohrförmigen Stutzens (5) oder eines Formkörpers (6), wobei die Anschlussvorrichtung (1) umfasst:
a) ein Gehäuse (7), in das mindestens ein Steckabschnitt (3) in einer Einsteckrichtung (8) einsteckbar ist,
b) zumindest ein einstückiges Sperrelement (9), das einen Sperrabschnitt (10) in Gestalt eines offenen Rings und einen Sicherungsabschnitt (11) umfasst, wobei jeder Sperrabschnitt (10) in einer im Gehäuse (7) ausgebildeten ringförmigen Innennut (12) vormontierbar ist und im vormontierten Zustand unter elastischer Auslenkung das Einstecken eines Steckabschnitts (3) in das Gehäuse (7) erlaubt und dessen Arretierung im Gehäuse (7) bewerkstelligt, indem der Sperrabschnitt (10) in die Innennut (12) des Gehäuses (7) eingreift und in die Aussennut (2) des Steckabschnitts (3) einrastet, und wobei jeder der Sperrabschnitte (10) durch eine zugeordnete Gehäuseöffnung (13) im Wesentlichen in einer Umfangsrichtung (14) in diese Nuten (2,12) einführbar und aus diesen Nuten (2,12) herausziehbar ist,
c) zumindest eine Sicherungseinrichtung (15), mittels welcher der Sicherungsabschnitt (11) auf einer Aussenseite der Gehäuseöffnung (13) und damit der mit dem Sicherungsabschnitt (11) verbundene Sperrabschnitt (10) eines Sperrelements (9) gegen ein Verschieben in einer Umfangsrichtung (14) sicherbar ist,
**dadurch gekennzeichnet, dass** zumindest eine der Sicherungseinrichtungen (15) als ein das Gehäuse (7) umgreifender und auf diesem Gehäuse (7) zumindest axial entgegen einem Widerstand bewegbarer Ring ausgebildet ist, der in der Einsteckrichtung (8) eine axiale Aussparung (16) aufweist, die zum Eingriff eines am Sicherungsabschnitt (11) des Sperrelements (9) angeordneten, im Wesentlichen radial abstehenden Nockens (17) ausgebildet ist, wobei dieser Eingriff ein Verschieben des Sperrelements (9) gegenüber der Sicherungseinrichtung (15), sowohl im vormontierten Zustand als auch nach dem Einstecken eines Steckabschnitts (3) in das Gehäuse (7), in einer Umfangsrichtung (14) verhindert.

2. Anschlussvorrichtung (1) nach Anspruch 1, **dadurch gekennzeichnet, dass** die Sicherungseinrichtung (15) an ihrer Innenseite an mindestens einem Federsteg (25) angebrachte Noppen (24) aufweist, die nach Überwindung des Widerstandes in axialer Richtung zum Einklicken in einer Ringnut (26) auf der Aussenseite des Gehäuses (7) ausgebildet sind.

3. Anschlussvorrichtung (1) nach Anspruch 1 oder 2, **dadurch gekennzeichnet, dass** die Sicherungseinrichtung (15) nach einem axialen Aufsetzen auf das Gehäuse (7) zudem auf dem Gehäuse (7) in dessen Umfangsrichtung (14) drehbar und zur Mitnahme des Nockens (17) in der axialen Aussparung (16) in dieser Umfangsrichtung (14) ausgestaltet ist.

4. Anschlussvorrichtung (1) nach Anspruch 3, **dadurch gekennzeichnet, dass** die Sicherungseinrichtung (15) ausgebildet ist zum Aufdrehen und zum Herausziehen des Sperrabschnitts (10) des Sperrelements (9) aus der Gehäuseöffnung (13), aus der Innennut (12) des Gehäuses (7) und aus der dieser gegenüber liegenden Aussennut (2) des Steckabschnitts (3) mittels Drehen in einer entsprechenden Umfangsrichtung (14), wobei das Herausziehen des Sperrelements (9) gegen einen Anfangs-Widerstand gesichert ist.

5. Anschlussvorrichtung (1) nach Anspruch 3 oder 4, **dadurch gekennzeichnet, dass** die Sicherungseinrichtung (15) ausgebildet ist zum Zudrehen und zum Wieder-Einführen des Sperrabschnitts (10) des Sperrelements (9) in die Gehäuseöffnung (13) und in die Innennut (12) des Gehäuses (7) oder zum Einführen des Sperrabschnitts (10) des Sperrelements (9) in die Gehäuseöffnung (13), in die Innennut (12) des Gehäuses (7) und in die dieser gegenüber liegende Aussennut (2) eines eingesetzten Steckabschnitts (3) mittels Drehen in einer entsprechenden Umfangsrichtung (14).

6. Anschlussvorrichtung (1) nach Anspruch 5, **dadurch gekennzeichnet, dass** ein Ende (18) der Innennut (12) als Anschlag für eine Spitze (19) des Sperrabschnitts (10) und somit als Endpunkt beim Zudrehen der Sicherungseinrichtung (15) ausgebildet ist.

7. Anschlussvorrichtung (1) nach einem der Ansprüche 4 bis 6, **dadurch gekennzeichnet, dass** ein axialer Steg (20) an der Innenseite der Sicherungseinrichtung (15) als Endanschlag bei einem Aufdrehen der Sicherungseinrichtung (15) angeordnet ist, wobei die Position des axialen Stegs (20) so bemessen ist, dass beim Erreichen dieses Endanschlags die Spitze (19) des Sperrabschnitts (10) noch in der Gehäuseöffnung (13) verbleibt.

8. Anschlussvorrichtung (1) nach einem der Ansprüche 4 bis 7, **dadurch gekennzeichnet, dass** diese für ein mehrfaches Zudrehen und Aufdrehen der ringförmigen Sicherungseinrichtung (15) konzipiert ist, indem diese Anschlussvorrichtung (1) zwischen einer Innenseite der Sicherungseinrichtung (15) und einer Aussenseite des Gehäuses (7) einen Raum (21) definiert, in welchem nach jedem Lösen einer Steckverbindung durch Aufdrehen der aufgesetzten Sicherungseinrichtung (15) das Sperrelement (9) verbleibt.

9. Anschlussvorrichtung (1) nach einem der vorhergehenden Ansprüche, **dadurch gekennzeichnet, dass** die Gehäuseöffnung (13) als ein an eine Querschnittsform und eine Neigung des Sperrabschnitts (10) gegenüber einer Einsteckrichtung (8) angepasstes Einlauffenster ausgebildet ist.

10. Anschlussvorrichtung (1) nach einem der vorhergehenden Ansprüche, **dadurch gekennzeichnet, dass** der Sperrabschnitt (10) des Sperrelements (9) im nicht eingebauten, spannungslosen Zustand eine helixartige Steigung (29) aufweist und/oder dass das Sperrelement (9) im Sicherungsabschnitt (11) zum Sperrabschnitt (10) hin einen gekröpften oder geknickten Drehabschnitt (32) aufweist und/oder dass das Sperrelement (9) bei der Spitze (19) des Sperrabschnitts (10) einen gekröpften oder geknickten Bereich (34) aufweist.

11. Anschlussvorrichtung (1) nach einem der vorhergehenden Ansprüche, **dadurch gekennzeichnet, dass** das Gehäuse (7) mindestens eine zusätzliche ringförmige Innennut (22) zur Aufnahme einer Dichtung (23) zwischen dem Gehäuse (7) und dem mindestens einen Steckabschnitt (3) aufweist.

12. Anschlussvorrichtung (1) nach einem der vorhergehenden Ansprüche, **dadurch gekennzeichnet, dass** der Steckabschnitt (3) gegenüber dem Gehäuse (7) gegen Verdrehen gesichert ist, vorzugsweise mittels mindestens einem Positioniernocken (27) an der Innenseite des Gehäuses (7) und entsprechenden Positionierausschnitten (28) in der Stirnseite des Steckabschnitts (3).

13. Anschlussvorrichtung (1) nach einem der vorhergehenden Ansprüche, **dadurch gekennzeichnet, dass** das Gehäuse (7) zum Aufnehmen genau eines Steckabschnitts (3) oder von zwei oder mehr Steckabschnitten (3) ausgebildet ist, wobei im zweiten Fall das Gehäuse (7) als Verbindungsteil zum Aufnehmen von zwei gegenüberliegenden Steckabschnitten (3), als T-Stück oder als Mehrfachanschluss zum Aufnehmen von mehr als zwei Steckabschnitten (3) ausgebildet ist.

14. Anschlussvorrichtung (1) nach einem der vorhergehenden Ansprüche, **dadurch gekennzeichnet, dass** als Material für das Sperrelement (9) und/oder die Sicherungseinrichtung (15) Kunststoffe oder Verbundwerkstoffe ausgewählt sind, und als Material für das Gehäuse (7) und/oder für den Steckabschnitt (3) Kunststoffe, Verbundwerkstoffe, Keramiken, Glaskeramiken, Gläser oder Metalle ausgewählt sind.

15. Anschlussvorrichtung (1) nach Anspruch 14, **dadurch gekennzeichnet, dass** die Kunststoffe Polyamide umfassen, wobei die Kunststoffe bzw. die Polyamide vorzugsweise Zusatzstoffe, Füllstoffe und/oder Verstärkungsmittel enthalten.

16. Anschlussvorrichtung (1) nach Anspruch 15, **dadurch gekennzeichnet, dass** die Polyamide ausgewählt sind aus der Gruppe umfassend Polyamid 6, Polyamid 66, Polyamid 46, Polyamid 11, Polyamid 12, Polyamidelastomere, Polyphthalamide, teilaromatische teilkristalline Copolyamide, und Mischungen dieser Polyamide.

17. Anschlussvorrichtung (1) nach einem der vorhergehenden Ansprüche, **dadurch gekennzeichnet, dass** der Formkörper (6) ausgewählt ist aus der Gruppe umfassend Vollkörper, Hohlkörper, Verschlüsse und Deckel.

18. Verwendung einer Anschlussvorrichtung (1) nach einem der Ansprüche 1 bis 17 zum Verbinden, Anschliessen oder Verschliessen von Fluidleitungen im Automobilbereich, im Sanitärbereich, bei Klimaanlagen und Lüftungsinstallationen, im Industrie- und Transportbereich, oder als Anschlüsse und/oder Halterungen bei industriellen Fertigungsverfahren.

## Claims

1. Connection device (1) for at least one plug-in section (3), having an annular outer groove (2), of a hose-shaped or tubular line (4), a tubular connecting piece (5) or a shaped body (6), wherein the connection device (1) comprises:
a) a housing (7) into which at least one plug-in section (3) can be inserted in an insertion direction (8),
b) at least one integral locking element (9) which comprises a locking section (10) in the form of an open ring and a securing section (11), wherein each locking section (10) can be pre-assembled in an annular inner groove (12) formed in the housing (7) and, in the pre-assembled state with elastic deflection, permits a plug-in section (3) to be inserted into the housing (7) and produces its arrest in the housing (7) in that the locking section (10) engages in the inner groove (12) of the housing (7) and latches into the outer groove (2) of the plug-in section (3), and wherein each of the locking sections (10) can be introduced into these grooves (2, 12) through an associated housing opening (13) substantially in a circumferential direction (14) and can be pulled out of these grooves (2, 12),
c) at least one securing device (15), by means of which the securing section (11) on an outside of the housing opening (13) and thus the locking section (10) of a locking element (9) connected to the securing section (11) can be secured against displacement in a circumferential direction (14),
**characterized in that** at least one of the securing devices (15) is formed as a ring which engages around the housing (7) and can be moved on this housing (7) at least axially against a resistance and which has, in the insertion direction (8), an axial recess (16) which is formed for engagement of a substantially radially projecting cam (17) which is arranged on the securing section (11) of the locking element (9), wherein this engagement prevents displacement of the locking element (9) relative to the securing device (15) in a circumferential direction (14), both in the pre-assembled state and after insertion of a plug-in section (3) into the housing (7).

2. Connection device (1) according to claim 1, **characterized in that** the securing device (15) has on its inside nubs (24) which are attached to at least one spring web (25) and which, after overcoming the resistance in the axial direction, are designed to click into an annular groove (26) on the outside of the housing (7).

3. Connection device (1) according to claim 1 or 2, **characterized in that** the securing device (15), after being placed axially on the housing (7), is in addition rotatable on the housing (7) in the circumferential direction (14) thereof and is designed for entraining the cam (17) in the axial recess (16) in this circumferential direction (14).

4. Connection device (1) according to claim 3, **characterized in that** the securing device (15) is designed for unscrewing and withdrawing the locking section (10) of the locking element (9) from the housing opening (13), from the inner groove (12) of the housing (7) and from the outer groove (2) of the plug-in section (3) opposite said inner groove by means of rotation in a corresponding circumferential direction (14), wherein the withdrawal of the locking element (9) is secured against an initial resistance.

5. Connection device (1) according to claim 3 or 4, **characterized in that** the securing device (15) is designed to turn shut and reinsert the locking section (10) of the locking element (9) into the housing opening (13) and into the inner groove (12) of the housing (7), or to insert the locking section (10) of the locking element (9) into the housing opening (13), into the inner groove (12) of the housing (7) and into the outer groove (2) of an inserted plug-in section (3) disposed opposite said inner groove by means of rotation in a corresponding circumferential direction (14).

6. Connection device (1) according to claim 5, **characterized in that** one end (18) of the inner groove (12) is designed as a stop for a tip (19) of the locking section (10) and thus as an end point when the locking device (15) is turned shut.

7. Connection device (1) according to one of claims 4 to 6, **characterized in that** an axial web (20) is arranged on the inside of the securing device (15) as an end stop when the securing device (15) is unscrewed, wherein the position of the axial web (20) is dimensioned such that, when this end stop is reached, the tip (19) of the locking section (10) still remains in the housing opening (13).

8. Connection device (1) according to one of claims 4 to 7, **characterized in that** it is designed for multiple turning shut and unscrewing of the annular securing device (15), **in that** said connection device (1) defines a space (21) between an inside of the securing device (15) and an outside of the housing (7), in which space (21) the locking element (9) remains after each release of a plug-in connection by unscrewing of the attached securing device (15).

9. Connection device (1) according to one of the preceding claims, **characterized in that** the housing opening (13) is designed as an inlet window adapted to a cross-sectional shape and an inclination of the locking section (10) with respect to an insertion direction (8).

10. Connection device (1) according to one of the preceding claims, **characterized in that** the locking section (10) of the locking element (9), in the non-installed, tension-free state, has a helical pitch (29) and/or that the locking element (9) in the securing section (11) has a cranked or bent rotary section (32) towards the locking section (10) and/or that the locking element (9) has a cranked or bent region (34) at the tip (19) of the locking section (10).

11. Connection device (1) according to one of the preceding claims, **characterized in that** the housing (7) has at least one additional annular inner groove (22) for receiving a seal (23) between the housing (7) and the at least one plug-in section (3).

12. Connection device (1) according to one of the preceding claims, **characterized in that** the plug-in section (3) is secured against twisting relative to the housing (7), preferably by means of at least one positioning cam (27) on the inside of the housing (7) and corresponding positioning cutouts (28) in the end face of the plug-in section (3).

13. Connection device (1) according to one of the preceding claims, **characterized in that** the housing (7) is designed to receive exactly one plug-in section (3) or two or more plug-in sections (3), wherein in the second case the housing (7) is designed as a connecting part for receiving two opposite plug-in sections (3), as a T-piece or as a multiple connection for receiving more than two plug-in sections (3).

14. Connection device (1) according to one of the preceding claims, **characterized in that** plastics or composite materials are selected as material for the locking element (9) and/or the securing device (15), and plastics, composite materials, ceramics, glass ceramics, glasses or metals are selected as material for the housing (7) and/or for the plug-in section (3).

15. Connection device (1) according to claim 14, **characterized in that** the plastics comprise polyamides, wherein the plastics or the polyamides preferably contain additives, fillers and/or reinforcing agents.

16. Connection device (1) according to claim 15, **characterized in that** the polyamides are selected from the group comprising polyamide 6, polyamide 66, polyamide 46, polyamide 11, polyamide 12, polyamide elastomers, polyphthalamides, semi-aromatic semi-crystalline copolyamides, and mixtures of these polyamides.

17. Connection device (1) according to one of the preceding claims, **characterized in that** the shaped body (6) is selected from the group comprising solid bodies, hollow bodies, closures and lids.

18. Use of a connection device (1) according to one of claims 1 to 17 for connecting, attaching or closing fluid lines in the automotive sector, in the sanitary sector, in air-conditioning systems and ventilation installations, in the industrial and transport sector, or as connections and/or holders in industrial manufacturing processes.

## Revendications

1. Dispositif de raccordement (1) pour au moins un tronçon d'enfichage (3) comprenant une rainure extérieure annulaire (2) d'une conduite en forme de tuyau ou de tube (4), d'un embout tubulaire (5) ou d'un corps moulé (6), le dispositif de raccordement (1) comprenant :
a) un boîtier (7) dans lequel on peut enficher le au moins un tronçon d'enfichage (3) dans un sens d'enfichage (8),
b) au moins un élément de blocage (9) d'un seul tenant qui comprend un tronçon de blocage (10) sous la forme d'un anneau ouvert et un tronçon d'arrêt (11), dans lequel chaque tronçon de blocage (10) peut être prémonté dans une rainure intérieure (12) de forme annulaire réalisée dans le boîtier (7) et permet, à l'état prémonté sous déformation élastique, l'enfichage d'un tronçon d'enfichage (3) dans le boîtier (7) et réalise son blocage dans le boîtier (7) en ce que le tronçon de blocage (10) vient s'engager dans la rainure intérieure (12) du boîtier (7) et s'enclencher dans la rainure extérieure (2) du tronçon d'enfichage (3), et dans lequel chacun des tronçons de blocage (10) peut être introduit dans ces rainures (2, 12) essentiellement dans une direction circonférentielle (14) et être retirées de ces rainures (2, 12) par une ouverture de boîtier correspondante (13),
c) au moins un dispositif d'arrêt (15) qui permet de fixer le tronçon d'arrêt (11) sur un côté extérieur de l'ouverture de boîtier (13) et avec le tronçon de blocage (10) d'un élément de blocage (9) relié au tronçon d'arrêt (11) contre un déplacement dans une direction circonférentielle (14),
**caractérisé en ce que** au moins un des dispositifs d'arrêt (15) est réalisé sous la forme d'un anneau venant entourer le boîtier (7) et mobile sur ce boîtier (7) au moins axialement contre une résistance, cet anneau présentant dans la direction d'enfichage (8) un évidement axial (16) qui est réalisé pour venir se mettre en prise avec une came (17) en saillie dans le sens essentiellement radial et agencée sur le tronçon d'arrêt (11) de l'élément de blocage (9), cette prise empêchant l'élément de blocage (9) de se déplacer par rapport au dispositif d'arrêt (15) dans un sens circonférentiel (14), aussi bien à l'état prémonté qu'après l'enfichage d'un tronçon d'enfichage (3) dans le boîtier (7).

2. Dispositif de raccordement (1) selon la revendication 1, **caractérisé en ce que** le dispositif d'arrêt (15) présente sur son côté intérieur des tétons (24) montés sur au moins une barrette à ressort (25) qui sont conçus, après avoir surmonté la résistance dans le sens axial, pour venir s'emboîter dans une gorge annulaire (26) sur le côté extérieur du boîtier (7).

3. Dispositif de raccordement (1) selon la revendication 1 ou 2, **caractérisé en ce que** le dispositif d'arrêt (15) est configuré, après un ajustement axial sur le boîtier (7), pour pouvoir pivoter sur le boîtier (7) dans le sens circonférentiel de ce dernier et pour entraîner la came (17) dans l'évidement axial (16) dans ce sens circonférentiel (14).

4. Dispositif de raccordement (1) selon la revendication 3, **caractérisé en ce que** le dispositif d'arrêt (15) est configuré pour ouvrir et pour extraire le tronçon de blocage (10) de l'élément de blocage (9) de l'ouverture de boîtier (13), de la rainure intérieure (12) du boîtier (7) et de la rainure extérieure (2) opposée du tronçon d'enfichage (3) en tournant dans une direction circonférentielle correspondante (14), l'extraction de l'élément de blocage (9) étant sécurisée contre une résistance initiale.

5. Dispositif de raccordement (1) selon la revendication 3 ou 4, **caractérisé en ce que** le dispositif d'arrêt (15) est conçu pour fermer et réintroduire le tronçon de blocage (10) de l'élément de blocage (9) dans l'ouverture de boîtier (13) et dans la rainure intérieure (12) du boîtier (7) ou pour introduire le tronçon de blocage (10) de l'élément de blocage (9) dans l'ouverture de boîtier (13), dans la rainure intérieure (12) du boîtier (7) et dans la rainure extérieure (2) opposée d'un tronçon d'enfichage engagé (3) en tournant dans une direction circonférentielle correspondante (14).

6. Dispositif de raccordement (1) selon la revendication 5, **caractérisé en ce qu'**une extrémité (18) de la rainure intérieure (12) est réalisée comme une butée pour une pointe (19) du tronçon de blocage (10) et donc comme point final lors de la fermeture du dispositif d'arrêt (15).

7. Dispositif de raccordement (1) selon l'une des revendications 4 à 6, **caractérisé en ce qu'**une traverse axiale (20) est agencée sur le côté intérieur du dispositif d'arrêt (15) comme butée finale lors de l'ouverture du dispositif d'arrêt (15), la position de la traverse axiale (20) étant mesurée de sorte que, lorsque l'on atteint cette butée finale, la pointe (19) du tronçon de blocage (10) se trouve encore dans l'ouverture de boîtier (13).

8. Dispositif de raccordement (1) selon l'une des revendications 4 à 7, **caractérisé en ce que** ce dernier est conçu pour ouvrir et fermer plusieurs fois le dispositif d'arrêt annulaire (15), dans la mesure où ce dispositif de raccordement (1) définit un espace (21) entre un côté intérieur du dispositif d'arrêt (15) et un côté extérieur du boîtier (7), dans lequel reste l'élément de blocage (9) après chaque déverrouillage d'une connexion enfichable par ouverture du dispositif d'arrêt (15).

9. Dispositif de raccordement (1) selon l'une des revendications précédentes, **caractérisé en ce que** l'ouverture de boîtier (13) est réalisée sous la forme d'une fenêtre d'entrée adaptée à la forme de section transversale et à l'inclinaison du tronçon de blocage (10) par rapport à une direction d'enfichage (8).

10. Dispositif de raccordement (1) selon l'une des revendications précédentes, **caractérisé en ce que** le tronçon de blocage (10) de l'élément de blocage (9) présente, à l'état non monté et à l'état hors tension, une pente de forme hélicoïdale (29) et/ou **en ce que** l'élément de blocage (9) présente dans le tronçon d'arrêt (11) au niveau du tronçon de blocage (10) un tronçon de rotation (32) coudé ou plié et/ou **en ce que** l'élément de blocage (9) présente au niveau de la pointe (19) du tronçon de blocage (10) une zone coudée ou pliée (34).

11. Dispositif de raccordement (1) selon l'une des revendications précédentes, **caractérisé en ce que** le boîtier (7) présente au moins une rainure intérieure (22) annulaire supplémentaire pour recevoir un joint d'étanchéité (23) entre le boîtier (7) et le au moins un tronçon d'enfichage (3).

12. Dispositif de raccordement (1) selon l'une des revendications précédentes, **caractérisé en ce que** le tronçon d'enfichage (3) est maintenu par rapport au boîtier (7) pour éviter de tourner, de préférence au moyen d'au moins une came de positionnement (27) sur le côté intérieur du boîtier (7) et par des sections de positionnement correspondantes (28) à l'avant du tronçon d'enfichage (3).

13. Dispositif de raccordement (1) selon l'une des revendications précédentes, **caractérisé en ce que** le boîtier (7) est réalisé pour recevoir précisément un tronçon d'enfichage (3) ou deux tronçons d'enfichage (3) ou plus, dans lequel, dans le deuxième cas, le boîtier (7) est réalisé comme un élément de liaison pour recevoir deux tronçons d'enfichage opposés (3), comme une pièce en T ou comme un raccordement multiple pour recevoir plus de deux tronçons d'enfichage (3).

14. Dispositif de raccordement (1) selon l'une des revendications précédentes, **caractérisé en ce qu'**il est choisi comme matériau pour l'élément de blocage (9) et/ou pour le dispositif d'arrêt (15) des matières plastiques ou des matériaux composites, et comme matériau pour le boîtier (7) et/ou pour le tronçon d'enfichage (3), des matières plastiques, des matériaux composites, des céramiques, des vitrocéramiques, des verres ou des métaux.

15. Dispositif de raccordement (1) selon la revendication 14, **caractérisé en ce que** les matières plastiques comprennent des polyamides, dans lequel les matières plastiques ou les polyamides contiennent de préférence des adjuvants, des agents de charge et/ou des agents de renforcement.

16. Dispositif de raccordement (1) selon la revendication 15, **caractérisé en ce que** les polyamides sont choisis à partir du groupe comprenant le polyamide 6, le polyamide 66, le polyamide 46, le polyamide 11, le polyamide 12, des élastomères de polyamide, des polyphtalamides, des copolyamides partiellement aromatique semi-cristallin, et des mélanges de ces polyamides.

17. Dispositif de raccordement (1) selon l'une des revendications précédentes, **caractérisé en ce que** le corps moulé (6) est choisi à partir du groupe comprenant des corps pleins, des corps creux, des obturateurs et des couvercles.

18. Utilisation d'un dispositif de raccordement (1) selon l'une des revendications 1 à 17 pour raccorder, relier ou fermer des conduites de fluide dans le secteur automobile, le domaine sanitaire, les systèmes de climatisation et de ventilation, dans le domaine de l'industrie et du transport, ou comme raccordements et/ou supports dans les procédés de fabrication industriels.
